**Europäisches Patentamt**

(19) **European Patent Office**

**Office européen des brevets**

(11) Numéro de publication: **0 043 163**
**B1**

(12) # FASCICULE DE BREVET EUROPEEN

(45) Date de publication du fascicule du brevet:
04.04.84

(21) Numéro de dépôt: **81200705.2**

(22) Date de dépôt: **23.06.81**

(51) Int. Cl.³: **B 65 G  43/08,** B 65 G  47/90

(54) **Installation permettant le transfert d'objets notamment de biscuits, à partir d'un convoyeur.**

(30) Priorité: **27.06.80  BE 201216**

(43) Date de publication de la demande:
**06.01.82 Bulletin 82/1**

(45) Mention de la délivrance du brevet:
**04.04.84 Bulletin 84/14**

(84) Etats contractants désignés:
**AT CH DE FR GB IT LI LU SE**

(56) Documents cités:
**FR - A - 1 376 528**
**FR - A - 2 047 373**
**FR - A - 2 240 876**

(73) Titulaire: **N.V. Biscuits Delacre S.A., Mimastraat, 10,**
**B-1800 Vilvoorde (BE)**

(72) Inventeur: **Busseniers, Roger, Avenue des Jardins, 52,**
**B-1030 Bruxelles (BE)**
Inventeur: **Deudon, Martial, Damsevaart, 120,**
**B-8310 Sint-Kruis-Brugge (BE)**

(74) Mandataire: **Pirson, Jean et al, c/o Bureau GEVERS**
**SA 7 rue de Livourne Bte 1, B-1050 Brussels (BE)**

Installation permettant le transfert d'objets notamment de biscuits, à partir d'un convoyeur

L'invention concerne une installation permettant le transfert d'objets, notamment de biscuits, à partir d'un convoyeur sur lequel lesdits objets ont été déposés de manière telle que la distance séparant les objets peut varier entre des limites déterminées, ledit transfert d'objets s'effectuant vers au moins un transporteur de ladite installation, ladite installation comportant, en outre, un transporteur sans fin portant des ventouses permettant de saisir lesdits objets sur le convoyeur précité et de les déposer sur le transporteur précité, les ventouses du transporteur se déplaçant dans le même plan que le convoyeur et au moins sur une distance de celui-ci suffisante pour amener lesdites ventouses au-dessus des objets à saisir et pour saisir lesdits objets.

Une telle installation, du type énoncé dans le préambule de la revendication 1, est en particulier décrite dans le brevet FR-A-2 047 373. Elle est utilisée pour le transfert de pièces plates, telles que des tôles et le dépôt de celles-ci à une certaine distance après que l'effet de succion exercé par les ventouses ait été annulé.

Cependant l'installation décrite dans ce brevet n'est pas conçue pour permettre à une seule ventoure de venir se placer à l'aplomb d'un seul objet à déplacer, objet qui en raison de sa nature et de ses dimensions ne peut être saisi par succion que si la ventoure occupe une place bien déterminée par rapport à l'objet à saisir. En outre, il n'est pas prévu de moyens permettant l'espacement régulier des objets sur la bande convoyeuse.

Dans le brevet FR-A-2 240 876, on décrit une installation permettant d'aligner et d'espacer régulièrement des objets, notamment des tablettes ou batons de chocolat, distribués suivant des rangées irrégulières à partir d'une machine de produktion telle qu'une mouleuse ou enrobeuse, sur un premier transporteur à vitesse variable en vue d'être amenés sur un transporteur intermédiaire se déplaçant à plus grande vitesse pour augmenter le pas des rangées irréguliéus. Une telle installation comprend également des organes d'espacement déplaçables de façon à venir entre les rangées de produits sur le transporteur intermédiaire, lesdits organes étant déplacés parallélement et dans le même sens que le transporteur pour venir sucessivement en prise avec une rangée de produits.

La présentè invention vise à proposer une autre solution au probléme de l'espacement régulier d'objets sur une bande transporteuse dans le cas d'une installation du type de celle décrite dans le brevet FR-A-2 047 373 précité.

L'invention s'applique particulièrement au domaine de l'emballage des biscuits dans des récipients ou cuvettes, mais il est clair qu'elle peut trouver application en tout autre domaine où se pose le problème du transfert d'objets un à un par une ventouse. En particulier, l'invention vise à résoudre de façon pratique les difficultés qui naissent dans une installation complètement automatisée, lorsqu'un très grand nombre d'objets, notamment des biscuits, doivent être rigoureusement positionnés lors de leur dépôt.

L'installation est donc particulièrement conçue pour transférer dans des cuvettes de papier, par exemple, des biscuits de type et de format très différents se présentant en alignement sur un ou plusieurs convoyeurs sur lesquels ils occupent une position telle que la distance qui les sépare n'est pas fixe, mais peut varier à l'intérieur de limites déterminées.

L'installation selon l'invention tend encore à résoudre le problème de la dépose d'un nombre correct de biscuits, ce qui implique le comptage des organes de préhension se présentant au-dessus desdites cuvettes et les moyens assurant le dépôt des objets ou biscuits dans ces cuvettes.

A cet effet, dans l'installation selon l'invention, chaque objet est saisi par une seule ventouse et des moyens sont prévus, d'une part, pour détecter un objet ou la position d'un élément d'un dispositif associé au passage d'un objet, sur le convoyeur précité et, d'autre part, pour accélérer ou ralentir soit la vitesse du transporteur sans fin, soit celle du convoyeur, de façon à amener une ventouse au-dessus d'un objet à saisir.

Dans une forme de réalisation avantageuse, un moyen de comptage d'impulsions est prévu pour enregistrer le retard ou l'avance de la position d'un objet à saisir par rapport à la position d'une ventouse.

Une particularité de l'invention réside dans le fait que les ventouses sont fixées sur une bande sans fin dont le brin inférieur est guidé le long de la paroi inférieure d'une boîte à vide qui présente une fente s'étendant sur le trajet des ventouses pendant lequel une dépression est créée à l'intérieur de celles-ci.

Selon une particularité remarquable de l'invention, au moins un conduit par lequel peut s'échapper un jet d'air est prévu dans ladite boîte à vide pour déboucher sensiblement au niveau de la fente précitée.

D'autres détails et avantages de l'invention ressortiront de la description que sera donnée ci-après d'une installation permettant le transfert d'objets, en particulier, mais non exclusivement, de biscuits à partir d'un convoyeur, selon l'invention.

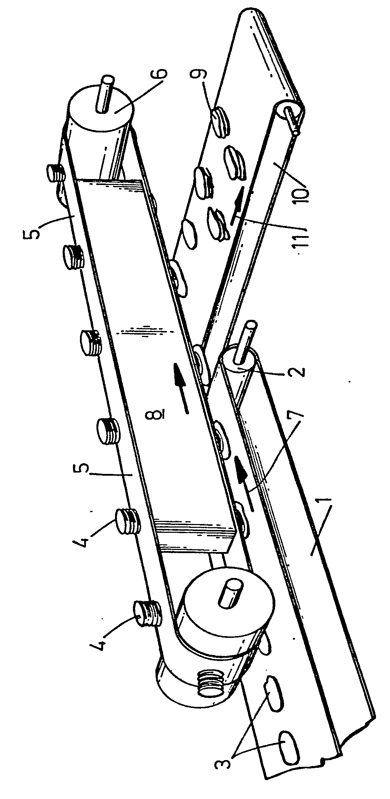

Cette description n'est donnée qu'à titre d'exemple et se réfère à la figure ci-jointe.

La figure annexée est une vue en perspective et schématique de l'installation selon l'invention.

L'installation représentée schématiquement par cette figure comporte un convoyeur 1, qui est de préférence à déplacement continu. Ce convoyeur peut être une bande transporteuse entraînée par des cylindres, dont seul de cylindre de renvoi 2 est visible. Les objets, en l'occurrence des biscuits 3, ont été déposés par des moyens connus en soi sur ce convoyeur, et cela à une cadence qui peut être irrégulière mais qui est de toute façon telle que les biscuits se trouvent disposés entre des limites prédéterminées. En pratique cependant le pas, c'est-à-dire la cadence à laquelle les biscuits ont été déposés, ou la distance qui les sépare entre eux sur le convoyeur peut varier dans des limites acceptables comme il vient d'être dit. Ceci a pour conséquence que les organes de préhension, pinces, ventouses, aimants s'il s'agit d'objets métalliques, ne se situent pas toujours au-dessus des articles à saisir. Sans correction de ce défaut, toute automatisation d'une installation de l'espèce est impensable.

Selon l'invention, les organes de préhension sont exécutés sous forme de ventouses 4 montées sur un transporteur sans fin 5, se déplaçant sur des tambours 6 dans le sens indiqué par la flèche 7 qui, en l'occurrence, est également celui du convoyeur 1. En théorie, la possibilité de faire se déplacer le convoyeur et la bande sans fin dans des sens opposés ne doit pas être exclue.

Le transporteur sans fin 5 est monté avec ses tambours 6 sur un bâti non représenté à la figure. Le transporteur sans fin 5 se trouve à une distance telle du brin supérieur du convoyeur que les ventouses réalisées, par exemple, en une matière souple telle que le caoutchouc naturel ou synthétique, viennent se placer exactement au contact des biscuits 3.

La dépression nécessaire à l'aspiration des biscuits 3, par les ventouses, se crée à l'intérieur de celles-ci pendant leur passage le long de la face inférieure de la boîte à vide 8. Le tapis souple dont peut être constitué le transporteur sans fin 5 est percé d'orifices, aux endroits des ventouses, de telle sorte que lors du passage de celles-ci le long d'une fente longitudinale ménagée dans la face inférieure de la boîte à vide, l'effet de succion se produit dans les vontouses au moment du passage de celles-ci le long de la fente en question. Des moyens d'étanchéité classiques sont prévus sur la distance que parcourt la bande sans fin 5 le long de la face inférieure de la boîte à vide. Les biscuits saisis par les ventouses sont lâchés à l'endroit où cesse l'effet de succion. Les biscuits tombent alors dans les cuvettes ou récipients 9 placés sur un dernier transporteur 10 à mouvement interrompu se déplaçant dans le sens de la flèche 11. Cependant, si l'on veut alimenter en biscuits plusieurs corbeilles disposées côte à côte sur le transporteur 10 dans l'axe de déplacement des ventouses, il faut prévoir dans la boîte à vide, au moins à hauteur de l'endroit où est placée une des corbeilles, par exemple la première si l'on considère le sens selon lequel se déplacent les ventouses, un conduit par lequel peut s'échapper au moment voulu, un jet d'air sous pression, conduit qui débouche sensiblement au niveau de la fente précitée. De la sorte, une dépression étant entretenue dans la boîte à vide, il est possible, alors qu'une ventouse se trouve encore sur le trajet de la fente précitée, d'agir sur la chute des biscuits dans les cuvettes.

Il est évident que si on estime que la présence d'un conduit débitant un jet d'air sous légère pression est nécessaire pour assurer une chute régulière des biscuits dans la cuvette, un tel conduit peut être prévu à l'aplomb de chaque cuvette et la commande du jet d'air peut alors être commandée selon un programme aisé à établir.

Un compteur est encore prévu qui compte les biscuits à déverser dans chaque cuvette. En réalité c'est le comptage du passage des vontouses qui influence le compteur ce qui permet d'accepter une tolérance en matière d'erreur qui est sans influence sur le bon fonctionnement continu de l'installation.

Il est évident que le transporteur 10 ne doit pas nécessairement se déplacer de manière orthogonale par rapport au sens de déplacement du convoyeur 1.

Le noeud de l'invention se situe au niveau des moyens qui pertettent aux organes de préhension de se trouver au-dessus des biscuits 3 ou, en tout état de cause, suffisamment au-dessus de ceux-ci pour que les objets, notamment les biscuits, soient soulevés par l'effet de succion agissant à partir des ventouses 4.

Pour réaliser cet objectif, il est prévu un dispositif à cellule photoélectrique réagissant à la réflexion d'un rayon émis, de manière connue en soi, et dirigé sur le brin supérieur du convoyeur 1. Ce rayon qui a un impact qui se situe sur le convoyeur 1 sur le trajet des biscuits que ce convoyeur entraîne, voit sa réflexion modifiée lorsque le rayon émis par le dispositif photoélectrique frappe un objet, en l'occurrence un biscuit. Ce point fixe est appelé »point de non-correction« (P. N. C.). Rappelons que dans l'exemple décrit, le pas qui sépare les biscuits est moins grand que le pas qui sépare les ventouses. Lorsqu'un biscuit atteint le point de non-correction défini ci-dessus, le rayon lumineux voit son angle de réflexion modifié et la cellule photoélectrique réagit. Par l'intermédiaire d'un appareillage électronique, par exemple, le dispositif à cellule photoélectrique déclenche l'addition d'impulsions, à laquelle il a été fait allusion plus haut, et double la vitesse du transporteur sans fin 5. La vitesse d'origine, ou vitesse normale, de ce transporteur étant V, la vitesse redoublée est 2V.

Il en résulte un rattrapage du biscuit par la ventouse appropriée. Lorsque cette dernière atteint le point de non-correction (P. N. C.) le comptage des impulsions est inversé. A ce moment également, la ventouse a progressé d'une distance D et le biscuit ou l'objet à saisir, d'une distance $\frac{D}{2}$, la vitesse d'avancement du biscuit demeurant constante.

Lorsque le compteur d'impulsions revient à zéro, la vitesse de déplacement des vontouses se trouve ramenée à sa valeur primitive, soit V.

Tandis que le nombre d'impulsions décompté est égal au nombre d'impulsions additionné, la ventouse considérée aura parcouru une distance D, à partir du P. N. C. et le biscuit une distance

Depuis le moment de sa détèction au P. N. C., le biscuit se sera déplacé de $\frac{D}{2} + \frac{D}{2}$, soit une distance D parcourue par la ventouse depuis le P. N. C. Grâce à cette disposition, la ventouse se trouve juste au-dessus du biscuit ou de l'objet à saisir.

Lorsque la ventouse se trouve au-dessus de l'objet, au moment où le rayon du dispositif à cellule photoélectrique détecte celui-ci, aucune correction ne doit être effectuée.

Le dispositif qui vient d'être décrit, permet, grâce à des moyens fiables et d'une grande simplicité de construction, de réaliser un automatisme complet de l'opération de préhension et de dépôt, après comptage, d'un très grand nombre d'objets, en l'occurrence des biscuits, dans des cuvettes. Le dispositif selon l'invention répond essentiellement aux besoins nés d'une cadence de production, de transfert et de comptage et de dépôt très élevée.

Il est entendu que l'invention n'est pas limitée à la forme d'exécution décrite ci-dessus et que bient des modifications peuvent y être apportées sans sortir du cadre de la présente demande de brevet. C'est ainsi que, de toute évidence, le trajet des transporteur et bande convoyeuse n'est pas nécessairement celui qui a été donné dans la description qui précède et c'est ainsi également que le nombre de bandes convoyeuses est illimité et que les modifications de vitesse imposées soit au convoyeur 1, soit au transporteur sans fin pourraient être réalisées par tout autre moyen que celui qui a été décrit comme un exemple d'exécution aisée.

**Revendications**

1. Installation permettant le transfert d'objets, notamment de biscuits, à partir d'un convoyeur (1) sur lequel lesdits objets ont été déposés de manière telle que la distance séparant les objets peut varier entre des limites déterminées, ledit transfert d'objets s'effectuant vers au moins un transporteur (10) de ladite installation, ladite installation comportant, en outre, un transporteur sans fin (5) portant des ventouses (4) permettant de saisir lesdits objets sur le convoyeur (1) précité et de les déposer sur le transporteur (10) précité, les vontouses (4) du transporteur sans fin (5) se déplaçant dans le même plan que le convoyeur (1) et au moins sur une distance de celui-ci suffisante pour amener lesdites ventouses (4) au-dessus des objets à saisir et pour saisir lesdits objets, caractérisée par le fait que chaque objet est saisi par une seule ventouse (4), et que des moyens sont prévus, d'une part, pour détecter un objet ou la position d'un élément d'un dispositif associé au passage d'un objet sur le convoyeur (1) précité et, d'autre part, pour accélérer ou ralentir soit la vitesse du transporteur sans fin (5), soit celle du convoyeur (1), de façon à amener une ventouse (4) au-dessus d'un objet à saisir (3).

2. Installation selon la revendication 1, caractérisée en ce qu'un moyen de comptage d'impulsions est prévu pour enregistrer le retard ou l'avance de la position d'un objet à saisir par rapport à la position d'une ventouse (4).

3. Installation selon la revendication 2, caractérisée en ce que les moyens prévus pour accélérer ou ralentir le déplacement du transporteur sans fin (5) agissent en fonction du retard ou de l'avance enrégistrés par le moyen de comptage d'impulsions.

4. Installation selon l'une quelconque des revendications 1 à 3, caractérisée en ce que les ventouses (4) sont fixées sur une bande sans fin (5) dont le brin inférieur est guidé le long de la paroi inférieure d'une boîte à vide (8) qui présente une fente s'étendant sur le trajet des vontouses pendant lequel une dépression est créée à l'intérieur de celles-ci.

5. Installation selon la revendication 4, caractérisée en ce qu'au moins un conduit par lequel peut s'échapper un jet d'air est prévu dans ladite boîte à vide (8), pour déboucher sensiblement au niveau de la fente précitée.

6. Installation selon l'une des revendications 1 à 5, dans laquelle les objets à saisir sont des biscuits destinés à être disposés à l'intérieur de cuvettes placées sur le transporteur (10), caractérisée en ce que le comptage des biscuits à déposer dans lesdites cuvettes, résulte du comptage des ventouses (4) lors de leur passage à l'aplomb d'une cuvette (9), des moyens étant prévus pour effectuer le comptage par rapport à une seule cuvette.

**Patentansprüche**

1. Anordnung zum Transferieren von Gegenstände von einem Förderer (1), auf dem die besagten Gegenstände in der Weise plagiert werden, daß der Abstand zwischen den Gegenständen in bestimmtem Umfange variieren kann, wobei das Transferieren der Gegenstände in Richtung auf zumindest ein Transportband (10) der Anordnung erfolgt und die Vorrichtung einen Endlos-Förderer (5) umfaßt, auf dem Sauger (4) in der Weise angebracht sind, daß die Gegenstände auf dem vorgenannten Förderer (1) gegriffen und auf dem vorgenannten Transportband (10) abgesetzt werden können, wobei sich die Sauger (4) des Endlos-Förderers (5) auf derselben Linie wie der Förderer und mindestens in einem Abstand von diesem bewegen, daß die Sauger (4) über die zu ergreifenden Gegenstände geführt werden können, um die genannten Gegenstände zu ergreifen, dadurch gekennzeichnet, daß jeder Gegenstand jeweils nur von einem einzigen Sauger (4) ergriffen wird und Mittel vorgesehen sind, um einerseits einen Gegenstand oder die Position eines Elements einer Vorrichtung, die im Zusammenhang steht mit dem Vorbeilaufen eines Gegenstandes auf dem vorgenannten Förderer (1), aufzuspüren und andererseits die Geschwindigkeit des Endlos-Förderers (5) entweder zu erhöhen oder herabzusetzen in der Weise, daß ein Sauger (4) über einen zu ergreifenden Gegenstand (3) gebracht wird.

2. Anordnung nach Anspruch 1, dadurch gekennzeichnet, daß ein Mittel zum Zählen von Impulsen vorgesehen ist, um das verspätete oder verfrühte Vorbeilaufen eines Gegenstandes im Verhältnis zum Sauger 4 zu registrieren.

3. Anordnung nach Anspruch 2, dadurch gekennzeichnet, daß die zum Beschleunigen oder Verlangsamen des Endlos-Förderers vorgesehenen Mittel wirksam werden im Verhältnis zum verspäteten oder verfrühten Vorbeilaufen, registriert durch das Mittel der Impulsionenzählung.

4. Anordnung nach einem der Ansprüche 1 – 3, dadurch gekennzeichnet, daß die Sauger (4) auf einem Endlosband (5) fixiert sind, dessen unten laufendes Band entlang der unteren Wand einer Vakuumdose (8), die einen Spalt aufzeigt, der sich über die Lauflinie der Sauger (4) erstreckt, währenddessen im Inneren ein Unterdruck erzeugt wird.

5. Anordnung nach Anspruch 4, dadurch gekennzeichnet, daß mindestens eine Leitung in der besagten Vakuumdose (8) vorgesehen ist, durch die ein Luftstrahl entweichen kann, um annähernd auf Höhe der vorgenannten Spalte auszutreten.

6. Anordnung nach einem der Ansprüche 1 – 5, in der die zu ergreifenden Gegenstände Kekse sind, die in kleine Schalen zu bringen sind, dadurch gekennzeichnet, daß sich das Zählen der abzusetzenden Kekse aus dem Zählen der Sauger (4) bei dem Vorbeilauf über der Schale (9) ergibt, wobei Mittel vorgesehen sind, die das Zählen in bezug auf eine einzige Schale erlauben.

## Claims

1. Equipment enabling to transfer goods, notably biscuits, from a feeder (1) on which said goods have been laid down, in such a way that the spacing between the goods may vary between determined limits, whereby said goods transfer is performed towards at least one conveyor (10) from said equipment, said equipment comprising besides, an endless conveyor (5) bearing suction cups (4) enabling to grip said goods on said feeder (1) and to lay same on said conveyor (10), the suction cups (4) of the endless conveyor (5) moving in the same plane as the feeder (1) and over at least a distance thereof which is sufficient to bring said suction cups (4) above the goods to be gripped and to grip said objects, characterized in that each goods is gripped by a single suction cup (4), and in that means are provided on the one hand to sense a piece of goods or the position of an element from a device being associated with the passage of one piece of goods on said feeder (1), and on the other hand to increase or slow-down either the speed of the endless conveyor (5), or the speed of the feeder (1), in such a way as to bring a suction cup (4) above a piece of goods to be gripped (3).

2. Equipment as defined in claim 1, characterized in that a pulsecounting means is provided to record the lag or lead of the position of a piece of goods to be gripped relative to the position of a suction cup (4).

3. Equipment as defined in claim 2, characterized in that the means being provided for increasing or slowing-down the movement of the endless conveyor (5) operate according to the lag or lead recorded by the pulsecounting means.

4. Equipment as defined in any one of claims 1 to 3, characterized in that the suction cup (4) are secured to an endless belt (5) the lower run of which is guided along the lower wall of a vacuum box (8) which has a slot extending along the path of the suction cups, during which path an underpressure is generated inside said cups.

5. Equipment as defined in claim 4, characterized in that at least one pipe through which may escape an air stream, is provided in said vacuum box (8), to open substantially level with said slot.

6. Equipment as defined in any one of claims 1 to 5, in which the goods to be gripped are biscuits to be arranged inside small cups arranged on the conveyor (10), characterized in that the counting of the biscuits to be laid down into said small cups, results from the counting of the suction cups (4) during the passage thereof in front of a small cup (9), means being provided to perform the counting relative to a single small cup.

0 043 163